# EUROPÄISCHE PATENTSCHRIFT

(11) **EP 0 988 338 B1**
(45) Veröffentlichungstag und Bekanntmachung des Hinweises auf die Patenterteilung: **04.12.2002**
(21) Anmeldenummer: 98934849.5
(22) Anmeldetag: 03.06.1998
(51) Int. Cl.: C08J 3/20, B29C 47/10

(54) **VERFAHREN ZUR HERSTELLUNG VON WEICH-PVC**
METHOD FOR PRODUCING FLEXIBLE PVC
PROCEDE DE PRODUCTION DE PVC SOUPLE

(30) Priorität: 04.06.1997 DE 19723467
(43) Veröffentlichungstag der Anmeldung: 29.03.2000
(73) Patentinhaber: Sika Schweiz AG, 8048 Zürich (CH)
(72) Erfinder: PIOTROWSKI, Bernhard, D-53797 Lohmar (DE)
(74) Vertreter: Wübken, Ludger
(86) Internationale Anmeldenummer: DE9801501
(87) Internationale Veröffentlichungsnummer: WO98055536

(56) Entgegenhaltungen:
- EP-A- 0 611 250
- WO-A-91/15347
- US-A- 3 679 788

## Beschreibung

### Technisches Gebiet

Bei der Herstellung von Produkten aus weichmacherhaltigen thermoplastischem Kunststoff, insbesondere von Weich-PVC, durch Extrudieren und/oder Kalandrieren wird in der Praxis das PVC-Pulver mit dem Weichmacher und ggf. weiteren Zuschlagstoffen in einer Heiz-Kühl-Mischerkombination zu einem sog. Dry-Blend oder bei höherer Temperatur zu einem Agglomerat aufbereitet. Dieses Dry-Blend oder Agglomerat kann anschließend in einem üblichen Extrusionsverfahren zu den gewünschten Produkten verarbeitet werden. Die Dry-Blend-Herstellung erfolgt üblicherweise bei einer Temperatur von ca. 50 bis 100 °C, wobei der Weichmacher in die einzelnen PVC-Körner vollständig eindringt, so daß eine trockene, rieselfähige Mischung entsteht.

### Stand der Technik

Die für die Extrusion von weichmacherhaltigem PVC notwendige Dry-Blend- bzw. Agglomeratherstellung erfolgt nahezu ausschließlich chargenweise und bedingt durch den zusätzlichen Verfahrensschritt einen erheblichen Mehraufwand an Energie, Zeit und Maschinentechnik.

Die US 3,679,788 A1 beschreibt ein Verfahren zur Herstellung von Formkörpern aus thermoplastischen Kunststoffen, wobei das Kunstharz in Pulverform einem Doppelschneckenextruder zugeführt und erwärmt wird. Danach wird der Weichmacher in das Kunststoffmaterial eingespritzt und durch Drehen der Schnecke homogenisiert. Die Aufnahme des Weichmachers und die Homogenisierung auf diese Weise ist jedoch sehr problematisch, da eine erhebliche Verweilzeit im Extruder benötigt wird, damit der Weichmacher vollständig aufgenommen wird.

### Aufgabe

Aufgabe der vorliegenden Erfindung ist es daher, ein vereinfachtes Verfahren zur Herstellung von Produkten aus weichmacherhaltigem thermoplastischem Kunststoff, insbesondere Weich-PVC, mittels eines Extruders zur Verfügung zu stellen.

### Darstellung der Erfindung

Die Erfindung löst diese Aufgabe durch ein Verfahren mit den Merkmalen des Anspruchs 1, bevorzugt in Verbindung mit einem oder mehreren der Merkmale der Unteransprüche.

Die Erfindung geht dabei von der überraschenden neuen Erkenntnis aus, daß es möglich ist, einen Teil des Weichmachers direkt im Extruder in das PVC-Pulver einzubringen, sofern die Weichmacher-PVC-Mischung innerhalb des Extruders einen gewissen Zeitraum zur Verfügung hat, um vor Erreichen einer Temperatur von ca. 145 °C vollständig in die PVC-Partikel einzudringen. Hierzu reicht nach der vorliegenden Erfindung eine Zeit von 10 bis 120 sec. als mittlere Verweilzeit des Materials bis zum Erreichen der Schmelzetempertaur von ca. 145 °C aus. Überraschend war diese Erkenntnis vor allem deshalb, weil bei der üblichen Vormischung des Weichmachers mit dem PVC-Pulver in Heiz-Kühl-Mischerkombinationen (Dry-Blend-Herstellung) erheblich längere Zeiten notwendig sind, um eine vollständige Aufnahme des Weichmachers im PVC-Pulver zu erreichen. Offensichtlich begünstigen die im Extruder vorliegenden Bedingungen - hohe Temperatur, der dort herrschende Druck und die hohe durch die Friktion eingebrachte Scherenergie - die Weichmacheraufnahme des PVC-Pulvers.

Massetemperaturen unterhalb der Einfriertemperatur des eingesetzten thermoplastischen Kunststoffs an der Einspritzstelle des Weichmachers sollten möglichst vermieden werden, da bei diesen Temperaturen keine genügende Weichmacheraufnahme erfolgt.

Relativ kurze Aufnahmezeiten für den Weichmacher erreicht man nach einer bevorzugten Ausführungsform der Erfindung insbesondere dadurch, daß der Weichmacher bei einer relativ hohen Temperatur des thermoplastischen Kunststoffs, also an einer von der Einzugszone des Extruders weiter entfernt liegenden Stelle, eingespritzt wird. Bevorzugt sollte die mittlere Temperatur des thermoplastischen Kunststoffs an der Weichmacher-Einspritzstelle ca. 90 bis 120 °C betragen, besonders bevorzugt 100 bis 110 °C. Niedrigere Temperaturen bedingen eine längere Aufnahmezeit für den Weichmacher, während bei höheren Temperaturen die Obergrenze für die zulässige Maximaltemperatur bis zur vollständigen Aufnahme des Weichmachers zu schnell erreicht wird. Im letzteren Fall muß u.U. ein Teilbereich des Extrudermantels in einem Bereich nach der Einspritzstelle gekühlt werden, um eine vorzeitige Überschreitung der Maximaltemperatur zu verhindern.

Eine Vorheizung des Weichmachers auf etwa die Temperatur des thermoplastischen Kunststoffs an der Einspritzstelle ist zwar nicht unbedingt notwendig, begünstigt aber die Weichmacheraufnahme ebenfalls.

Weiterhin sollte die PVC/Weichmacher-Mischung unmittelbar nach der Einspritzung des Weichmachers möglichst intensiv durchmischt werden, beispielsweise durch besondere Mischelemente auf der Schnecke oder durch eine besonders gestaltete Extruderausführung, insbesondere als Planetwalzen-Extruder. Letztere ist insbesondere deshalb vorzuziehen, weil die Verweilzeitverteilung der Mischung hier besonders eng ist, also alle Partikel bis zur Erreichung der Maximaltemperatur für die vollständige Weichmacheraufnahme von ca. 145 °C nahezu die gleiche Verweilzeit benötigen.

Nach der Erfindung wird ein Teil des Weichmachers bereits vor dem Extruder mit dem PVC-Pulver in an sich bekannter Weise zu einem Pulver, feinkörnigem Granulat oder einem Dry-Blend verarbeitet, während der Hauptteil des Weichmachers erst im Extruder zugegeben wird. Es hat sich überraschend herausgestellt, daß bereits relativ geringe Mengen an Weichmacher, die vor dem Extrusionsvorgang dem PVC-Pulver zugegeben werden, die Weichmacheraufnahmezeit für den Rest des Weichmachers auf einen Bruchteil derjenigen Zeit verkürzt, die notwendig ist, um die gesamte Menge des Weichmachers im Extruder aufzunehmen. Für diese Verfahrensweise ist zwar ein zusätzlicher Mischer für die Vermischung des PVC-Pulvers mit der Teilmenge des Weichmachers notwendig, allerdings benötigt man gegenüber dem Stand der Technik wesentlich kleinere Mischer und einen wesentlich geringeren Energie- und Zeitaufwand für die Herstellung des Dry-Blends.

Bereits sehr geringe Mengen von 2 bis 5 Gew.-% der insgesamt eingesetzten Weichmachermengen sind für diesen überraschenden Effekt ausreichend. Es werden daher bevorzugt 2 bis 30, insbesondere 5 bis 15 Gew.-% des gesamten eingesetzten Weichmachers vor dem Extruder und dementsprechend 98 bis 70 Gew.-%, bevorzugt 95 bis 85 Gew.-%, im Extruder zugegeben.

Die Einspritzung des Weichmachers an sich ist unkritisch. Hierzu können zwar spezielle Ring-Verteiler eingesetzt werden, es reicht jedoch eine einfache oder mehrere neben- und oder hintereinander angeordnete Bohrungen durch den Extruder-Mantel, durch die die Weichmachermenge kontinuierlich eingepumpt wird.

Da die Viskosität des thermoplastischen Kunststoffs in erheblichem Maße vom Weichmacheranteil abhängt, sollte zur Vermeidung des Festfahrens des Extruders die Extrudersteuerung so ausgelegt sein, daß bei einer Unterbrechung der Weichmacher-Zufuhr der Extruder sofort gestoppt wird oder mit geringerer Drehzahl leer gefahren wird. Ebenso sollte beim Abstellen der Anlage die Weichmacher-Zufuhr erst nach einer entsprechenden Zeit nach Abschalten der Zufuhr der Festkomponenten abgeschaltet werden.

Insbesondere bei Anwendung des Verfahrens mit Vormischung eines Teils des Weichmachers kann auf herkömmliche Doppelschneckenextruder zurückgegriffen werden, so daß auch bestehende Anlagen ohne wesentliche Veränderung mit dem erfindungsgemäßen Verfahren betrieben werden können.

Soweit in dieser Beschreibung auf PVC-Pulver als einzusetzendem thermoplastischen Kunststoff hingewiesen wird, ist dieses nur als Beispiel zu verstehen. Die Erfindung eignet sich grundsätzlich auch für andere thermoplastische Kunststoffe, deren Micro-Struktur ähnlich der von PVC ist und deren Weichmacheraufnahmevermögen ähnlichen Grundsätzen unterliegt. Bevorzugt wird S-PVC (Suspensions-PVC) eingesetzt, als Weichmacher wird ein Primär-Weichmacher bevorzugt.

Um den Effekt der verbesserten Weichmacheraufnahme bei Vormischung eines Teils des Weichmachers zu verdeutlichen, wurden folgende (Vergleichs-)Versuche 1 bis 4 durchgeführt: Im ersten Versuch, der dem Stand der Technik entspricht, wurde eine trokkene Mischung von 390 g, bestehend aus PVC-Pulver, Stabilisator und einer geringen Menge Füllstoff (Titandioxyd), in einen auf 88 °C Manteltemperatur temperierten Brabender® Meßkneter (PLASTI-CORDER PL2100) eingefüllt und mit konstanter Drehzahl von 100 min⁻¹ für 5 min geknetet. Nach diesen 5 min wurden 210 g Weichmacher zugegeben und die zunächst noch nasse Mischung bei konstanter Drehzahl weiter geknetet. Nach insgesamt 9 min wurde der Versuch beendet. Während der gesamten Versuchsdauer wurden der Massetemperatur- und Drehmomentenverlauf aufgezeichnet. Im Vergleich hierzu wurde der gleiche Gesamtansatz in den Versuchen 2 bis 4 untersucht, wobei jedoch ein Teil des Weichmachers vorab mit dem PVC-Pulver zu einen Dry-Blend verarbeitet wurde.

Die in den Versuchen verwendeten Ansätze sind in der nachfolgenden Tabelle 1 zusammen mit den Versuchsergebnissen - Trokkenzeit und während der Trocknung aufgenommene Energie - wiedergegeben.

**Tabelle 1**

| | **Versuch 1** =Diagramm 1 | **Versuch 2** =Diagramm 2 | **Versuch 3** =Diagramm 3 | **Versuch 4** =Diagramm 4 |
|---|---|---|---|---|
| S-PVC-Pulver [g] | 365,63 | 365,63 | 365,63 | 365,63 |
| Weichmacher DOP (Vormischung) [g] | 0,00 | 91,70 | 41,79 | 20,89 |
| Stabilisator-Mischung | 12,77 | 12,77 | 12,77 | 12,77 |
| Titandioxyd | 11,61 | 11,61 | 11,61 | 11,61 |
| Vormischung gesamt [g] | 390,00 | 481,70 | 431,79 | 410,89 |
| Weichmacherzugabe [g] | 210,00 | 118,30 | 168,21 | 189,11 |
| Gesamtmasse Probe [g] | 600,00 | 600,00 | 600,00 | 600,00 |
| | | | | |
| Anteil des vorab zugegebenen Weichmachers [%] | 0% | 44% | 20% | 10% |
| Trockenzeit [s] | 108 | 20 | 30 | 32 |
| dissipierte Energie [Nm] | 1824 | 237 | 328 | 398 |

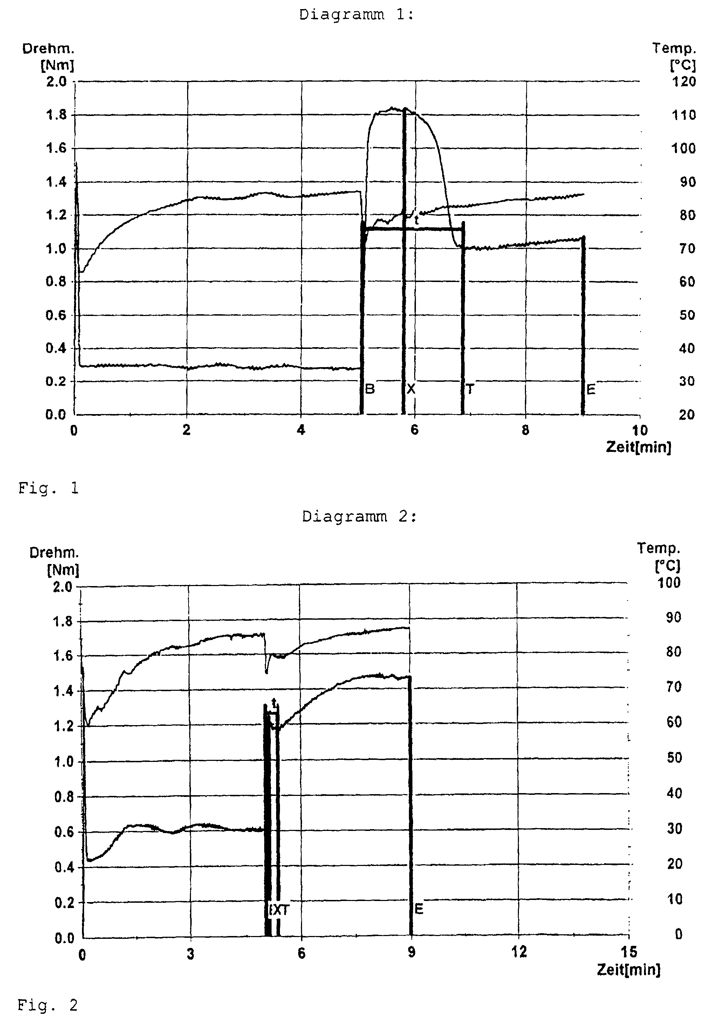

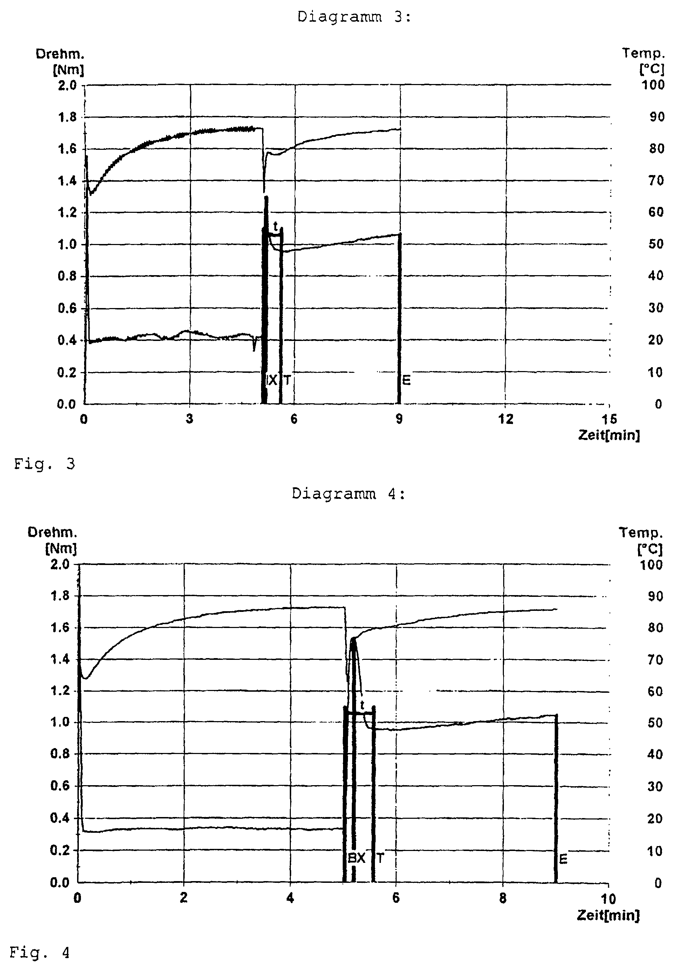

Die während der Versuchsdurchführung aufgezeichneten Drehmoment- und Temperaturverläufe sind in den Diagrammen 1 bis 4 (Fig. 1-4) veranschaulicht, wobei jeweils der Zeitpunkt der Weichmacherzugabe mit "B", der Zeitpunkt des maximalen Drehmomentes mit "X", der Zeitpunkt des minimalen Drehmomentes nach Zugabe des Weichmachers, definitionsgemäß der Trockenpunkt, mit "T" und das Versuchsende mit "E" gekennzeichnet sind. Man erkennt deutlich bei Versuch 1 = Diagramm 1 = Fig. 1, bei dem die gesamte Menge an Weichmacher im Versuchskneter zugegeben wurde, daß das Drehmoment nach der Weichmacherzugabe sprunghaft auf einen Wert von ca. 1,8 Nm ansteigt, um dann nach vollständiger Aufnahme des Weichmachers nach 108 s auf den Minimalwert von ca. 1 Nm wieder abzufallen.

Im Vergleich hierzu erfolgt die Weichmacheraufnahme in den Versuchen 2 bis 4 in einem Bruchteil dieser Zeit, nämlich in 20 s in Versuch 2 bis 32 s in Versuch 4. Ebenso verringert sich die während der Weichmacheraufnahme durch Friktion eingebrachte Energie signifikant von 1824 Nm auf 237 Nm in Versuch 2 bzw. 398 Nm in Versuch 5.

### Vergleichsbeispiel (Stand der Technik):

In einem Vergleichsbeispiel wird Weich-PVC gemäß dem Stand der Technik als Dry-Blend in einem Extruder plastifiziert und anschließend zu einer Folie kalandriert. Hierzu wird ein Ansatz, bestehend aus

**Tabelle 2**

| **Komponente** | **Anteil** | **Menge je Mischerfüllung** |
|---|---|---|
| S-PVC-Pulver [g] | 61% | 305 kg |
| Weichmacher DOP [g] | 35% | 175 kg |
| Stabilisator-Mischung | 2% | 10 kg |
| Titandioxyd | 2% | 10 kg |
| **Summen** | **100%** | **500 kg** |

wie folgt zu einem Dry-Blend verarbeitet: Die Feststoff-Komponenten werden in einen 500 kg fassenden Hentschel-Mischer gegeben und ca. 2 min. homogenisiert. Die Temperatur beträgt zu diesem Zeitpunkt 60 °C. Unter laufendem Rühren wird der Weichmacher als Flüssigkomponente kontinuierlich innerhalb von 90 sec. zugegeben und die zunächst nasse Mischung weiter gerührt. Innerhalb von 8 min. nach der Weichmacherzugabe wird der Trokkenpunkt bei einer Endtemperatur von 75 °C erreicht. Das trokkene Dry-Blend wird anschließend in einen Kühlmischer gegeben, bis zu einer Endtemperatur von 40 °C abgekühlt und in einen Vorratsbehälter zur Beschickung eines Plastifizierextruders gegeben.

Das abgekühlte Dry-Blend wird in einem zweiten Arbeitsgang in einem handelsüblichen Planetwalzenextruder mit Einschnecken-Einzugszone, Länge der Einzugszone 4 D, und anschließendem Planetwalzenteil, Länge 8 D, plastifiziert. Die plastifizierte Masse verläßt den Plastifizierextruder mit einer Massetemperatur von 178 °C und wird unmittelbar anschließend auf einen 4-Walzen-F-Kalander zu einer Dichtungsbahn einer Dicke von 0,8 mm geformt.

### Wege zur Ausführung der Erfindung

### Beispiel 1 (erfindungsgemäß):

Hierbei wurde die gleiche PVC-Bahn wie in dem Vergleichsbeispiel mit dem gleichen Ansatz und den gleichen Vorrichtungen hergestellt, wobei jedoch nur 10 Gew.-% des gesamten Weichmachers in den Hentschel-Mischer gegeben wurden:

**Tabelle 3**

| **Komponente** | **Anteil** | **Menge je Mischerfüllung** |
|---|---|---|
| S-PVC-Pulver [g] | 89% | 445,3 kg |
| Weichmacher DOP [g] | 5% | 25,5 kg |
| Stabilisator-Mischung | 3% | 14,6 kg |
| Titandioxyd | 3% | 14,6 kg |
| **Summen** | **100%** | **500 kg** |

Durch die geringere Weichmachermenge konnte eine um ca. 45 % höhere Menge an PVC und Zuschlagstoffen in jedem Mischungsvorgang verarbeitet werden. Der Trockenpunkt im Hentschel-Mischer wurde bereits nach 2 min. nach der Zugabe des Weichmachers erreicht, die Temperatur des Dry-Blends betrug zu diesem Zeitpunkt 65 °C. Das so hergestellte Dry-Blend mit geringem Weichmacheranteil wurde unmittelbar einem Vorratsbehälter zugeführt, eine Abkühlung in einem Kühlmischer war nicht notwendig.

Anschließend wurde die weichmacherarme Mischung wie im Vergleichsbeispiel einem Planetwalzen-Extruder zugeführt, technische Daten siehe Vergleichsbeispiel. Unmittelbar am Eingang des Planetwalzenteiles wurde eine ringförmige Düse mit insgesamt 12 über den Umfang verteilten Einspritzlöchern und Verteilerkanal angebracht. Durch vorher durchgeführte Messungen wurde ermittelt, daß die Massetemperatur des PVC's an dieser Stelle ca. 105 °C betrug. Der Weichmacher wurde auf eine Temperatur von ca. 80 °C aufgeheizt und mittels einer Dosierpumpe in den Planetwalzenextruder gepumpt. Durch Versuche wurde ermittelt, daß der Weichmacher nach einer Strecke von 4 D und Erreichen einer mittleren Massetemperatur von 130 °C sowie einer mittleren Verweilzeit nach Eingabe des Weichmachers von 15 sec. praktisch vollständig von dem PVC aufgenommen wurde. Im anschließenden Teil des Planetwalzenextruders wurde die Masse weiter homogenisiert und plastifiziert, so daß sie den Plastifizier-Extruder wie im Vergleichsbeispiel mit einer Temperatur von 178 °C verließ. Anschließend wurde die plastifizierte Masse wie im Vergleichsbeispiel auf einem 4-Walzen-F-Kalander zu einer Dichtungsbahn einer Dicke von 0,8 mm geformt.

Durch die Weichmachereinspritzung im Extruder konnte die notwendige Kapazität des Heizmischers auf weniger als 40 % des vorherigen Wertes herabgesetzt werden, der Kühlmischer konnte ganz entfallen. Die Gesamt-Energieaufnahme der Anlage konnte dabei ebenfalls wesentlich gesenkt werden.

Die im Vergleichsbeispiel und im erfindungsgemäßen Beispiel 1 hergestellten Dichtungsbahnen wurden einer mechanischen Prüfung unterzogen mit dem Ergebnis, daß sämtliche physikalischen Daten im Rahmen der Meßgenauigkeit gleich waren.

Weiterhin wurden die Bahnen bezüglich des Weichmacherverlustes überprüft. Hierzu werden Proben der Bahnen jeweils für 7,5 h und 13 h bei 130 °C einem Vakuum (Ölpumpenvakuum) ausgesetzt und der Weichmacherverlust bestimmt:

**Tabelle 4**

| **Zeit** | **Weichmacherverlust Vergleichsversuch** | **Weichmacherverlust Beispiel 1** |
|---|---|---|
| 7,5 h | 1,1 % | 0,8 % |
| 13 h | 1,6 % | 1,4 % |

Aus den Meßergebnissen ergibt sich somit ein um ca. 20 % verbesserter Wert für den Weichmacherverlust.

### Beispiel 2 (erfindungsgemäß):

Zunächst wurde wie im Beispiel 1 eine Vormischung mit einem geringen Weichmacheranteil von insgesamt 10 Gew.-% des eingesetzten Weichmachers hergestellt. Diese Vormischung wurde in einen Doppelschnecken-Extruder, Länge 36 D, eingegeben. Durch Temperaturmessungen wurde zunächst der optimale Einspritzpunkt für den Weichmacher mit 5 D ermittelt. Die Massetemperatur betrug an dieser Stelle ca. 100 °C. Der Weichmacher wurde durch einfache Bohrungen durch den Mantel mittels einer Dosierpumpe mit einer Temperatur von ebenfalls 100 °C eingespritzt. Die Schnekkenbestückung wurde zur optimalen Durchmischung nach der Weichmacher-Einspritzstelle durch an sich bekannte Knetelemente optimiert. Nach einer mittleren Verweilzeit von 40 sec. erreichte die Masse eine mittlere Temperatur von 140 °C, wobei der Weichmacher vollständig von dem PVC-Material aufgenommen worden war. Anschließend wurde die Masse auf der restlichen Schneckenlänge weiter homogenisiert und plastifiziert und in einem Breitschlitzwerkzeug zu einer Folie einer Dicke von 0,8 mm geformt.

## Patentansprüche

1. Verfahren zur Herstellung von Produkten aus weichmacherhaltigem thermoplastischem Kunststoff mittels eines Extruders, **gekennzeichnet durch** folgende Verfahrensschritte:
- der thermoplastische Kunststoff wird vor dem Extruder mit einem Teil des Weichmachers zu einem Pulver, feinkörnigem Granulat oder Dry-Blend verarbeitet;
- der thermoplastische Kunststoff mit der eingearbeiteten Weichmacher-Teilmenge wird direkt einem Extruder zugeführt und in einem ersten Abschnitt auf eine Temperatur von 50°C bis 140°C erwärmt;
- in das Kunststoffmaterial wird bei einer Temperatur von 50 °C bis 140 °C der restliche Weichmacher eingespritzt;
- der thermoplastische Kunststoff und der Weichmacher werden homogen vermischt,
-- wobei die Mischung **durch** Friktion weiter erwärmt wird,
-- wobei die Mischung derart erfolgt, daß die mittlere Verweilzeit des Materials von der Weichmachereinspritzung bis zur Erreichung einer mittleren Temperatur des Materials von 145 °C 10 bis 120 s beträgt und
-- wobei der Weichmacher vollständig von dem thermoplastischen Kunststoff aufgenommen wird;
- die homogene Mischung aus thermoplastischem Kunststoff und Weichmacher wird auf eine Temperatur oberhalb von 145°C erwärmt und dabei plastifiziert/vollständig aufgeschmolzen;
- die Mischung wird zu dem gewünschten Produkt geformt.

2. Verfahren nach Anspruch 1, **dadurch gekennzeichnet, daß** 2 bis 30 Gew.-% des Weichmachers vor dem Extruder und 98 bis 70 Gew.-% des Weichmachers im Extruder zugegeben werden.

3. Verfahren nach Anspruch 2, **dadurch gekennzeichnet, daß** 5 bis 15 Gew.-% des Weichmachers vor dem Extruder und 95 bis 85 Gew.-% des Weichmachers im Extruder zugegeben werden.

4. Verfahren nach einem der Ansprüche 1 bis 3, **dadurch gekennzeichnet, daß** als thermoplastischer Kunststoff PVC und als Weichmacher ein Primär-Weichmacher eingesetzt werden.

5. Verfahren nach einem der Ansprüche 1 bis 4, **dadurch gekennzeichnet, daß** die Einspritzung des Weichmachers bei einer Temperatur des thermoplastischen Kunststoffs von 90 bis 120 °C erfolgt.

6. Verfahren nach Anspruch 5, **dadurch gekennzeichnet, daß** die Einspritzung des Weichmachers bei einer Temperatur des thermoplastischen Kunststoffs von 100 bis 110 °C erfolgt.

7. Verfahren nach einem der Ansprüche 1 bis 6, **dadurch gekennzeichnet, daß** als Extruder ein Doppelschneckenextruder verwendet wird.

## Claims

1. Process for producing products from plasticized thermoplastics by means of an extruder, **characterized by** the following steps:
- prior to the extruder, the thermoplastic is processed with some of the plasticizer to give a powder, fine granules or dry blend;
- the thermoplastic with the portion of plasticizer incorporated is fed directly to an extruder and heated in a first section to a temperature of from 50 to 140°C;
- the remaining plasticizer is injected, at a temperature of from 50 to 140°C, into the thermoplastic material;
- the thermoplastic and the plasticizer are mixed homogeneously,
-- where the mixture is further heated by friction,
-- where the mixing takes place in such a way that the average residence time of the material from the injection of plasticizer to reaching an average temperature of 145°C in the material is from 10 to 120 s, and
-- where all of the plasticizer is absorbed by the thermoplastic;
- the homogeneous mixture made from thermoplastic and plasticizer is heated to a temperature above 145°C and thus plastified/completely melted; and
- the mixture is moulded to give the desired product.

2. Process according to Claim 1, **characterized in that** from 2 to 30% by weight of the plasticizer is added prior to the extruder and from 98 to 70% by weight of the plasticizer is added within the extruder.

3. Process according to Claim 2, **characterized in that** from 5 to 15% of the plasticizer is added prior to the extruder and from 95 to 85% by weight of the plasticizer is added in the extruder.

4. Process according to any of Claims 1 to 3, **characterized in that** PVC is used as thermoplastic and a primary plasticizer is used as plasticizer.

5. Process according to any of Claims 1 to 4, **characterized in that** the temperature of the thermoplastic is from 90 to 120°C when the plasticizer is injected.

6. Process according to Claim 5, **characterized in that** the temperature of the thermoplastic is from 100 to 110°C when the plasticizer is injected.

7. Process according to any of Claims 1 to 6, **characterized in that** the extruder used is a twinscrew extruder.

## Revendications

1. Procédé de fabrication, par extrusion, de produits en matière plastique contenant un agent plastifiant, **caractérisé par le fait qu'**il comprend les étapes de procédé suivantes :
• avant l'introduction dans l'extrudeuse, la matière plastique thermoplastique et une fraction de l'agent plastifiant sont mis sous forme de poudre, de granulés fins ou de mélange sec,
• le mélange de matière plastique thermoplastique et d'une fraction de l'agent plastifiant est introduit directement dans une extrudeuse et y est chauffé, dans une première zone, jusqu'à une température comprise entre 50 °C et 140 °C,
• on incorpore dans la matière plastique, à une température de 50 °C à 140 °C, le reste de l'agent plastifiant,
• on mélange la matière plastique et l'agent plastifiant jusqu'à homogénéité,
- les forces de friction chauffant encore davantage le mélange,
- le mélange étant mis en oeuvre de manière à ce que le temps de séjour moyen du matériau dans l'extrudeuse, entre l'injection de l'agent plastifiant et le moment où une température moyenne de 145 °C est atteinte, soit compris entre 10 et 120 secondes, et
- l'agent plastifiant étant complètement absorbé par la matière plastique thermoplastique,
• le mélange homogène de matière plastique thermoplastique et d'agent plastifiant est chauffé jusqu'à une température supérieure à 145 °C et ainsi plastifié/complètement fondu, et
• on utilise le mélange pour mouler le produit souhaité.

2. Procédé selon la revendication 1, **caractérisé par le fait que** l'on ajoute, avant l'introduction dans l'extrudeuse, de 2 % à 30 % en poids de l'agent plastifiant et, lorsque le mélange est dans l'extrudeuse, de 98 % à 70 % en poids de l'agent plastifiant.

3. Procédé selon la revendication 2, **caractérisé par le fait que** l'on ajoute, avant l'introduction dans l'extrudeuse, de 5 % à 15 % en poids de l'agent plastifiant et, lorsque le mélange est dans l'extrudeuse, de 95 % à 85 % en poids de l'agent plastifiant.

4. Procédé selon l'une quelconque des revendications 1 à 3, **caractérisé par le fait que** l'on utilise, en tant que matière thermoplastique, du PVC et, en tant qu'agent plastifiant, un plastifiant primaire.

5. Procédé selon l'une des revendications 1 à 4, **caractérisé par le fait que** l'injection de l'agent plastifiant se fait lorsque la matière thermoplastique est à une température comprise entre 90 et 120 °C.

6. Procédé selon la revendication 5, **caractérisé par le fait que** l'injection de l'agent plastifiant se fait lorsque la matière thermoplastique est à une température comprise entre 100 et 110 °C.

7. Procédé selon l'une des revendications 1 à 6, **caractérisé par le fait que** l'on utilise, en tant qu'extrudeuse, une extrudeuse à double vis.
